# DEMANDE DE BREVET EUROPEEN

(11) **EP 1 112 916 A1**
(43) Date de publication de la demande: **04.07.2001**
(21) Numéro de dépôt: 00128312.6
(22) Date de dépôt: 22.12.2000
(51) Int. Cl.: B62D 25/08, B62D 65/00

(54) **Procédé pour fixer une poutre pare-chocs à l'avant d'un véhicule automobile**

(30) Priorité: 29.12.1999 FR 9916667
(71) Demandeur: VALEO THERMIQUE MOTEUR, 78321 La Verrière (FR)
(72) Inventeur: Sandjivy, Valérie, 75014 Paris (FR)
(74) Mandataire: Lemaire, Marc

(57) **Abrégé**

La poutre pare-chocs (6) est simplement posée en avant d'une face avant (1) destinée à supporter divers composants à l'extrémité avant du véhicule, où elle est retenue par des pattes (7, 8) solidaires de la face avant. Après fixation de la face avant sur la structure du véhicule, la poutre y est elle- même fixée directement et séparément, sans autre manipulation.

## Description

L'invention concerne la construction des véhicules automobiles.

Il est de pratique courante aujourd'hui, lors du montage d'un véhicule automobile, de mettre en place à l'avant de celui-ci divers composants tels que blocs d'éclairage, échangeurs de chaleur, avertisseurs sonores, serrure de capot, sous forme d'un sous-ensemble dans lequel ces composants sont fixés sur un support dit face avant. Un tel sous-ensemble peut être réalisé par un équipementier, et le constructeur automobile n'a plus qu'à le présenter à l'avant du véhicule et à fixer la face avant sur les éléments de structure du véhicule réalisant ainsi la fixation indirecte des composants portés par la face avant, sans avoir besoin de manipuler ni de fixer individuellement ces composants sur la structure du véhicule. Ceci constitue une simplification considérable des opérations de montage du véhicule.

La face avant peut également être utilisée pour amener en position à l'avant du véhicule une poutre pare-chocs destinée comme son nom l'indique à protéger contre les chocs des composants vulnérables situés dans cette région. À cet effet, la poutre est fixée par vissage sur la face avant lors de la constitution du sous-ensemble. Cependant, cette fixation a qu'une utilité provisoire étant donné que, pour remplir sa fonction, la poutre pare-chocs doit être fixée solidement et directement sur la structure du véhicule, notamment sur les longerons.

Le but de l'invention est de simplifier la réalisation du sous-ensemble comprenant la face avant et la poutre pare-chocs.

L'invention vise notamment un procédé pour fixer à l'avant d'un véhicule automobile une poutre pare-chocs et une face avant, dans lequel on constitue un sous-ensemble comprenant ladite face avant et ladite poutre, on présente ce sous-ensemble de telle manière que la face avant et la poutre occupent sensiblement les emplacements qui leur sont destinés à l'avant du véhicule, la poutre étant disposée en avant de ladite face avant, et on fixe solidement et individuellement la face avant et la poutre sur la structure du véhicule.

L'invention prévoit que, dans ledit sous-ensemble, la poutre est simplement posée sur des moyens de retenue appartenant à la face avant, qui l'empêchent de se déplacer vers le bas et latéralement et de s'écarter vers l'avant.

Des caractéristiques optionnelles de l'invention, complémentaires ou alternatives, sont énoncées ci-après:
- Les moyens de retenue sont venus de matière avec la face avant.
- Les moyens de retenue comprennent au moins une patte.
- Les moyens de retenue comprennent au moins une patte inférieure coopérant avec un bord inférieur de la poutre pour empêcher celle-ci de se déplacer vers le bas et vers l'avant et au moins une patte supérieure coopérant avec une surface de la poutre tournée vers l'avant pour empêcher la poutre de s'écarter de la face avant, chacun des deux bords latéraux de la poutre coopérant en outre avec l'une au moins desdites pattes pour son immobilisation latérale.
- La face avant comprend deux montants se plaçant respectivement sur les côtés gauche et droit du véhicule, sur lesquels sont formés respectivement des pattes appartenant aux moyens de retenue et coopérant avec les bords latéraux gauche et droit de la poutre.

L'invention a également pour objet une face avant utilisable dans le procédé telle que définie ci-dessus, comprenant des moyens de retenue pour une poutre pare-chocs empêchant celle-ci de se déplacer vers le bas et latéralement et de s'écarter vers l'avant.

Avantageusement, la face avant est en matière plastique et est obtenue, avec les moyens de retenue, par surmoulage sur un renfort par exemple métallique.

Les caractéristiques et avantages de l'invention seront exposés plus en détail dans la description ci-après, en se référant aux dessins annexés.

La figure 1 est une vue de face d'une face avant et d'une poutre pare-choc posée sur celle-ci lors de la mise en oeuvre du procédé selon l'invention.

La figure 2 est une vue partielle de côté montrant la coopération de la poutre pare-chocs avec les moyens de retenue de la face avant.

La figure 3 est une vue partielle en perspective d'une variante du sous-ensemble de la figure 1.

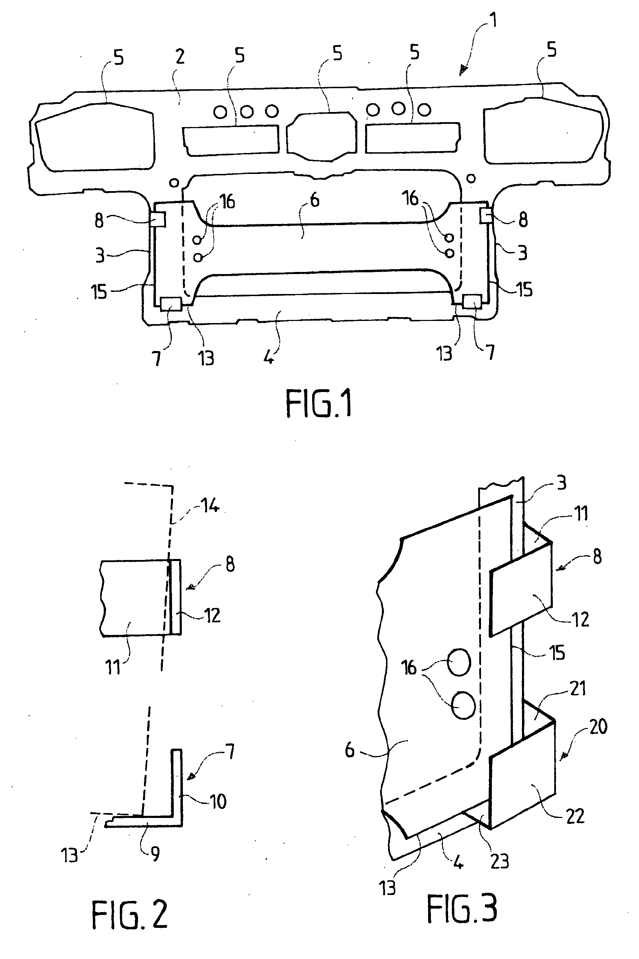

La figure 1 montre une face avant 1 de forme générale classique composée d'une traverse supérieure 2, de deux montants 3 s'étendant vers le bas à partir de la traverse supérieure, et d'une traverse inférieure 4 reliant les extrémités inférieures des montants 3. La partie visible de la face avant 1 est moulée par injection de matière plastique et surmoulée sur un renfort métallique qui s'étend au moins dans la traverse supérieure. Cette dernière présente des ouvertures 5 destinées à loger des composants qui doivent être montés sur le véhicule par l'intermédiaire de la face avant 1.

Des pattes venues de moulage avec la partie injectée de la face avant 1 et s'étendant vers l'avant à partir des montants et/ou de la traverse inférieure servent de moyens de retenue pour une poutre pare-chocs 6. Dans l'exemple illustré, deux pattes inférieures 7 sont situées au voisinage des extrémités inférieures des montants 3, et deux pattes supérieures 8 sur les bords extérieurs de ceux-ci, au voisinage de la traverse 2. Comme on le voit plus particulièrement sur la figure 2, chaque patte inférieure 7 comprend une aile 9 s'étendant vers l'avant sensiblement selon un plan horizontal, et une aile 10 s'étendant verticalement vers le haut à partir de l'extrémité avant de l'aile 9. De même, chaque patte supérieure 8 comprend une aile 11 s'étendant vers l'avant selon un plan sensiblement vertical et une aile 12 s'étendant sensiblement selon un plan vertical perpendiculaire au précédent, de l'extrémité avant de l'aile 11 en direction de l'autre patte 8. Le bord inférieur 13 de la poutre 6 s'appuie sur l'aile inférieure 9 de chaque patte inférieure 7, et la face antérieure 14 de la poutre s'appuie sur l'aile avant 10, 12 de l'une au moins des pattes 7, 8. De plus, la poutre est emprisonnée latéralement entre les ailes latérales 11 des deux pattes 8, qui se trouvent en regard des bords latéraux 15 de la poutre. Cette dernière est ainsi maintenue en place sur la face avant 1. La poutre est munie de trous 16 pour le passage de vis servant à sa fixation définitive sur les longerons du véhicule.

Sur la figure 3, où les mêmes numéros de références que sur les figures 1 et 2 sont utilisés pour désigner des éléments identiques ou analogues, la patte supérieure 8 est inchangée par rapport à celles décrites précédemment. En revanche les pattes inférieures 7 sont remplacées par deux pattes inférieures 20 comprenant chacune une aile latérale 21 et une aile antérieure 22 semblables aux ailes 11 et 12 des pattes supérieures 8, ainsi qu'une patte inférieure 23 s'étendant sensiblement selon un plan horizontal, raccordée au bord inférieur de la patte 21 et/ou à celui de la patte 22, et dirigée à partir de la patte 21 vers le montant opposé et/ou à partir de la patte 22 vers l'arrière, jusqu'à une distance de la traverse inférieure 4 inférieure à l'épaisseur de la poutre 6. Dans ce mode de réalisation, les ailes 21 servent conjointement aux ailes 11 à l'immobilisation latérale de la poutre pare-chocs.

## Revendications

1. Procédé pour fixer à l'avant d'un véhicule automobile une poutre pare-chocs (6) et une face avant (1), dans lequel on constitue un sous-ensemble comprenant ladite face avant et ladite poutre, on présente ce sous-ensemble de telle manière que la face avant et la poutre occupent sensiblement les emplacements qui leur sont destinés à l'avant du véhicule, la poutre étant disposée en avant de ladite face avant, et on fixe solidement et individuellement la face avant et la poutre sur la structure du véhicule, caractérisé en ce que, dans ledit sous-ensemble, la poutre est simplement posée sur des moyens de retenue appartenant à la face avant, qui l'empêchent de se déplacer vers le bas et latéralement et de s'écarter vers l'avant.

2. Procédé selon la revendication 1, caractérisé en ce que les moyens de retenue sont venus de matière avec la face avant.

3. Procédé selon l'une des revendications 1 et 2, caractérisé en ce que les moyens de retenue comprennent au moins une patte (7,8).

4. Procédé selon l'une des revendications 1 à 3, caractérisé en ce que les moyens de retenue comprennent au moins une patte inférieure (7) coopérant avec un bord inférieur (13) de la poutre pour empêcher celle-ci de se déplacer vers le bas et vers l'avant et au moins une patte supérieure (8) coopérant avec une surface (14) de la poutre tournée vers l'avant pour empêcher la poutre de s'écarter de la face avant, chacun des deux bords latéraux (15) de la poutre coopérant en outre avec l'une au moins (8) desdites pattes pour son immobilisation latérale.

5. Procédé selon l'une des revendications précédentes, caractérisé en ce que la face avant comprend deux montants (3) se plaçant respectivement sur les côtés gauche et droit du véhicule, sur lesquels sont formés respectivement des pattes (7,8) appartenant aux moyens de retenue et coopérant avec les bords latéraux (15) gauche et droit de la poutre.

6. Face avant (1) utilisable dans le procédé selon l'une des revendications précédentes, caractérisée en ce que la face avant comprend des moyens de retenue (7,8) pour une poutre pare-chocs (6) empêchant celle-ci de se déplacer vers le bas et latéralement et de s'écarter vers l'avant.

7. Face avant selon la revendication 6, caractérisée en ce que les moyens de retenue comprennent au moins une patte (7,8).

8. Face avant selon l'une des revendications 6 et 7, caractérisée en ce que la patte est venue de matière avec la face avant.

9. Face avant selon l'une des revendications 6 à 8, caractérisée en ce que la face avant est en matière plastique et est obtenue, avec les moyens de retenue, par surmoulage sur un renfort par exemple métallique.
